(19)

Europäisches
Patentamt
European
Patent Office
Office européen
des brevets

(11) **EP 1 876 008 A1**

(12) **EUROPEAN PATENT APPLICATION**
published in accordance with Art. 153(4) EPC

(43) Date of publication:
**09.01.2008 Bulletin 2008/02**

(51) Int Cl.:
**B29C 49/08** (2006.01)   **B29C 49/64** (2006.01)
**B65D 1/00** (2006.01)   **C08L 67/02** (2006.01)
**B29K 67/00** (2006.01)   **B29L 22/00** (2006.01)

(21) Application number: **06745804.2**

(22) Date of filing: **21.04.2006**

(86) International application number:
**PCT/JP2006/308923**

(87) International publication number:
**WO 2006/115287 (02.11.2006 Gazette 2006/44)**

(84) Designated Contracting States:
**DE FR GB**

(30) Priority: **25.04.2005 JP 2005127010**
**05.09.2005 JP 2005256005**

(71) Applicant: **TOYO SEIKAN KAISHA, LTD.**
**Tokyo 100-8522 (JP)**

(72) Inventors:
• **YAMADA, Toshiki**
**c/o Toyo Seikan Group Corporate R&D**
**Yokohama-shi,**
**Kanagawa 240-0062 (JP)**

• **KIKUCHI, Atsushi**
**c/o Toyo Seikan Group Corporate R&D**
**Yokohama-shi,**
**Kanagawa 240-0062 (JP)**

(74) Representative: **Manley, Nicholas Michael**
**W.P. Thompson & Co.**
**Coopers Building**
**Church Street**
**Liverpool L1 3AB (GB)**

(54) **CONTAINER FORMED BY STRETCH FORMING AND PROCESS FOR PRODUCING THE SAME**

(57)    A stretch-formed container having a layer comprising a blend of an ethylene terephthalate type polyester resin and another material, **characterized in that** the layer comprising the blend has a dispersion structure composed of a continuous phase comprising the ethylene terephthalate type polyester resin and a dispersed phase comprising the other material and that at least the container body part has a tan $\delta$ maximum temperature of 115 °C or lower in a dynamic viscoelasticity examination. Due to the constitution, even when the mechanical stretching rate reaches a limit, strain hardening effectively occurs. Thus, a stretch-formed container of a polyester resin can be provided which has both of excellent heat resistance attributable to high-temperature stretching and a stretch balance attributable to strain hardening.

Fig. 1

10 μm

EP 1 876 008 A1

**Description**

Technical Field

The present invention relates to a stretch-formed container of a polyester resin and a process for producing the same. More specifically, the invention relates to a stretch-formed container having both excellent heat resistance due to high-temperature stretching and a stretch balance due to strain hardening.

Background Art

Stretch-formed containers of a thermoplastic polyester resin such as polyethylene terephtalate exhibit excellent transparency, surface luster, as well as shock resistance, rigidity and gas-barrier property required for the containers such as bottles and cups, and have, therefore, been used as containers for containing various kinds of beverages and foods.

However, the stretch-formed containers of the polyester resin have poor heat resistance undergoing thermal deformation and contraction and deformation of volume when they are hot-filled with the contents. Therefore, the heat setting has been effected after the containers are formed by biaxial stretch blowing.

Heat resistance imparted by the heat set to the stretch-formed containers of the polyester resin may be capable of withstanding a temperature of about 90°C at the time of hot-filling. However, the heat sterilization or pasteurization such as retort sterilization after the content has been filled, is conducted in a high-temperature atmosphere of not lower than 100°C for about 20 to 50 minutes. Therefore, the simple heat setting after the forming is not enough for realizing the heat resistance for withstanding the heat sterilization.

As a method of improving heat resistance of the stretch-formed containers of the polyester, JP-A-5-178338 proposes the use of a polyester resin comprising 70 to 5% by weight of a polyethylene terephthalate and 30 to 95% by weight of a polybutylene terephthalate. Even by using the above copolymerized polyester resin, however, the heat resistance that was accomplished was about 90°C at the greatest.

When the above stretch-formed container is to be formed by a one-step blow-forming method, a preform may be stretched by heating it at a high temperature to form the stretch-formed container having a small residual strain and excellent heat resistance.

For example, Japanese Patent No. 1767894 proposes a method of obtaining a stretch-blown bottle comprising a polyester resin having a large heat resistance by a one-step blow-forming method by setting a preform temperature to be as high as possible, and by conducting the stretch forming and the heat setting simultaneously by utilizing the heat produced by the internal friction at the time of stretching at a high rate or the heat produced by the crystallization.

When stretched at a high temperature, however, the phenomenon of strain hardening occurs little. Unless the stretching speed is very increased, therefore, the stretching does not propagate over the whole formed article, and the stretch-formed container fails to possess a uniform thickness. So far, therefore, in case the mechanical stretching speed has reached a limit, the stretching temperature was lowered to attain a stretch balance sacrificing the heat resistance which was the advantage of the high-temperature stretching.

Further, as a method of realizing the heat resistance that withstands a high temperature in excess of 100°C, JP-A-2001-150522 proposes a two-step blow-forming method that effects the final blow forming after the blow-formed article has been subjected to the heat shrinking/heat setting in the first step. According to the two-step blow-forming method, it is made possible to provide a container formed by stretch-forming the polyester having excellent heat resistance capable of withstanding the heat sterilization in the high-temperature region as described above.

That is, according to the two-step blow-forming method, a high degree of crystallization is accomplished since the heat setting is conducted at a high temperature after the blow forming in the first step and in the second step and, besides, the residual distortion can be decreased since the working rate is suppressed in blow-forming the heat-shrunk bottle in the second step. As a result, it is made possible to form a container by stretch-forming the polyester having excellent heat resistance capable of withstanding high temperatures of not lower than 100°C even by using an ordinary polyethylene terephthalate without using a particularly copolymerized polyester.

As compared to the one-step blow-forming method, however, the two-step blow-forming method includes an increased number of forming steps and is accompanied by a problem of an increased cost for the facility and a large energy cost. Therefore, it has been desired to produce a container by stretch-forming a polyester having a heat resistance capable of withstanding high temperatures of not lower than 100°C relying on the one-step blow-forming method.

It is, therefore, an object of the present invention to provide a container formed by stretch-forming a polyester resin which can be effectively strain-hardened even when a mechanical stretching rate has reached a limit and, therefore, has both excellent heat resistance due to high-temperature stretching and a stretch balance due to the strain hardening.

Another object of the present invention is to provide a process for producing a container formed by stretch-forming a polyester resin having a good stretch balance due to the strain hardening irrespective of the stretching rate even in the stretch blow-forming under a high temperature condition.

According to the present invention, there is provided a stretch-formed container having a layer of a blend of an ethylene terephthalate type polyester resin and another material, wherein the layer of the blend has a dispersion structure comprising a continuous phase of the ethylene terephthalate type polyester resin and a dispersion phase of the another material, and at least the container body portion has a tan $\delta$ maximum temperature of not higher than 115°C in the dynamic viscoelasticity measurement.

In the stretch-formed container of the present invention, it is desired that:

1. The another material is a polyester resin and, particularly, contains a naphthalenedicarboxylic acid or a cyclohexanedimethanol as a constituent monomer;

2. A glass transition temperature Tg(m) of the ethylene terephthalate type polyester resin and a glass transition temperature Tg(d) of the polyester resin which is the another material, satisfy a relationship Tg(d) - Tg(m) $\geqq$ 10 (°C) ;

3. When the another material is the polyester resin, the dispersion structure of the layer of the blend contains the dispersion phase of a long diameter of 0.4 to 10 $\mu$m at a ratio of 60 to 100% in the unstretched portion;

4. The polyester resin which is the another material is blended in an amount of 0.5 to 15% by weight;

5. The another material is an inorganic material and is, particularly, a talc and/or a mica;

6. When the another material is the inorganic material, the dispersion structure of the layer of the blend contains the dispersion phase of a long diameter of 0.1 to 50 $\mu$m at a ratio of 60 to 100% in the unstretched portion;

7. The inorganic material which is the another material is blended in an amount of 0.1 to 10% by weight;

8. The dispersion structure of the layer of the blend is such that, in the stretched portion, the continuous phase surrounding the dispersion phase is more highly stretched and oriented than the continuous phase in other portions;

9. The coefficient of contraction of the container body portion at 200°C is not larger than 10% as measured by TMA;

10. The stretch-formed container is heat set under a temperature condition of 150 to 230°C;

11. In the heat-set stretch-formed container, the layer of the blend is such that a calorific value of isothermal crystallization at 130°C reaches a maximum value in a time range of 4.5 to 12 minutes, and at least a drum portion has a tan $\delta$ maximum value of not larger than 0.3 and a tan $\delta$ maximum temperature of not higher than 115°C in the dynamic viscoelasticity measurement;

12. In the heat-set stretch-formed container, at least the body portion has a temperature arriving at a 0.5% contraction of not lower than 130°C and a coefficient of contraction at 200°C of not larger than 3% as measured by TMA.

According to the present invention, there is further provided a process for producing a stretch-formed container comprising a blend of an ethylene terephthalate type polyester resin and another material, by stretch blow-forming a preform that has a layer of the blend forming a dispersion structure comprising a continuous phase of the ethylene terephthalate type polyester resin and a dispersion phase of the another material under a condition of a stretching temperature of 110 to 120°C.

In the process for producing a stretch-formed container of the present invention, it is desired that:

1. The blend contains a polyester resin as the another material, and is blended with the polyester resin in an amount of 0.5 to 15% by weight;

2. The blend contains an inorganic material, and is blended with the inorganic material as the another material in an amount of 0.1 to 10% by weight;

3. Following the stretch blow forming, the heat setting is conducted under a temperature condition of 150 to 230°C; and

4. The preform comprises such a blend that a calorific value of isothermal crystallization at 130°C reaches a maximum value in a time range of 4.5 to 12 minutes.

In the stretch-formed container of the invention having a layer of a blend of an ethylene terephthalate type polyester resin and another material, a first important feature resides in that the layer of the blend has a dispersion structure comprising a continuous phase of the ethylene terephthalate type polyester resin and a dispersion phase of the another material.

That is, in the stretch-formed container of the present invention, the layer of the blend forms a dispersion structure comprising a continuous phase and a dispersion phase. Here, the dispersion phase (island portions) in the dispersion structure stretches and deforms little, only the continuous phase surrounding the dispersion phase locally stretches to an excess degree in the continuous phase (sea portion) undergoing strain hardening like when stretched at high rates. As a result, the local and excess stretching effectively contributes to propagating the necking thereby imparting a stretch balance (uniformity of thickness distribution) like when the stretching is effected at a high rate under high temperature conditions.

When a resin is used as the another material, the dispersion structure of the layer of the blend of the invention becomes a so-called islands-in-the-sea dispersion structure in the polymer blend. When an inorganic material is used as the another material, the dispersion structure of the layer of the blend of the invention assumes a state in which the inorganic material is dispersed as a dispersant in the polyester resin comprising chiefly the ethylene terephthalate.

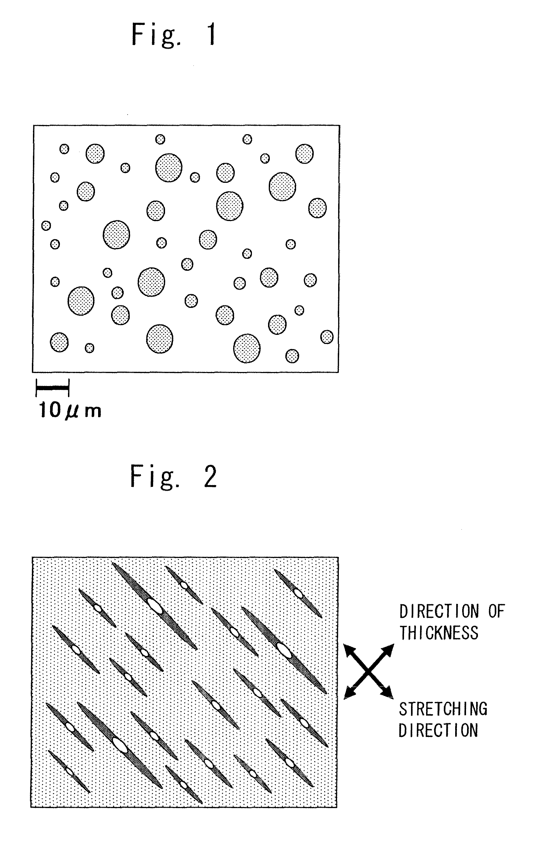

Fig. 1 is a diagram schematically showing a transmission microphotograph of a phase structure of a layer of a blend in the bottom portion (unstretched portion) of the stretch-formed container of the present invention. As will be obvious from Fig. 1, the above-mentioned dispersion structure is formed in the layer of the blend.

When the polyester resin is used as the another material to be blended with the ethylene terephthalate type polyester resin, it is desired that the dispersion structure contains a dispersion phase of a long diameter of 0.4 to 10 $\mu$m at a ratio of 60 to 100%. When the inorganic material is used as the another material, it is desired that the dispersion structure contains the dispersion phase of a long diameter of 0.1 to 50 $\mu$m at a ratio of 60 to 100% in the unstretched portion.

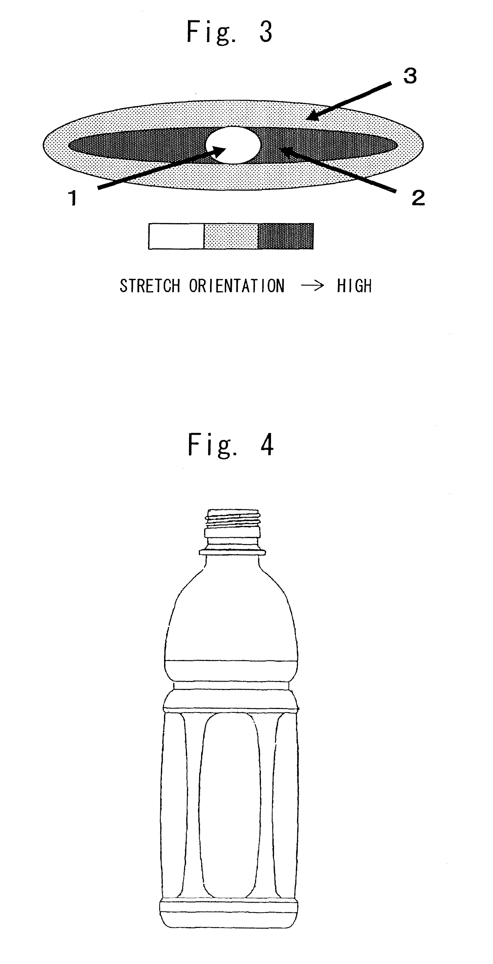

Fig. 2 is a diagram schematically showing a transmission microphotograph of a phase structure of a layer of a blend in the body portion (stretched portion) of the stretch-formed container of the present invention, and Fig. 3 is a diagram schematically illustrating the degree of stretch orientation of the continuous phase surrounding a dispersion phase. As will be obvious from Figs. 2 and 3, in the stretch-formed container of the present invention, it will be learned that the dispersion phase 1 deforms little, and the continuous phase 2 near the dispersion phase 1 is highly stretched and oriented as compared to the surrounding continuous phase 3 as shown in Fig. 3.

In the transmission polarized microphotograph of Fig. 2, however, the distribution of the degrees of stretch orientation is observed as a difference in the color tone.

The above action and effect of the stretch-formed container of the present invention will also become obvious from the results of Examples appearing later. That is, despite of using a blend of the polyethylene terephthalate blended with another material, the stretch-formed containers having excellent stretch balance can be formed under a low-temperature stretching condition, but the stretch balance becomes poor under a high-temperature stretching condition if the dispersion structure comprising the continuous phase and the dispersion phase is not formed (Comparative Examples 5 to 7), and a good stretch balance is not obtained like when the stretch-formed container of polyester comprises the polyethylene terephthalate only (Comparative Example 3). The stretch-formed container of the invention forming the above dispersion structure, on the other hand, offers excellent stretch balance not only under a low-temperature stretching condition but also under a high-temperature stretching condition (Examples 1 to 7).

In the stretch-formed container of the invention, further, a second important feature resides in that at least the container body portion, i.e., the stretched portion has a tan $\delta$ maximum temperature of not higher than 115°C in the dynamic viscoelasticity measurement. That is, tan 6 in the dynamic viscoelasticity measurement is a value obtained by dividing a loss modulus of elasticity E" by a storage modulus of elasticity E'. Therefore, a tan $\delta$ maximum temperature which is small in the dynamic viscoelasticity measurement means that a glass transition temperature in the amorphous portion is close to a glass transition temperature in the unlocked state, i.e., the polymer chain is little tense and is little locked by the residual strain, making it possible to suppress the contraction and deformation which accompany the relaxation of strain at the time of heat-treating the container.

This will also become obvious from the results of Examples appearing later. That is, it is obvious that a large residual strain remains in the stretch-formed containers when the body portions thereof have tan $\delta$ maximum temperatures of not lower than 115°C in the dynamic viscoelasticity measurement (Comparative Examples 4 and 8) while the residual strain is very decreased in the stretch-formed containers of which the body portions have tan 6 maximum temperatures of not higher than 115°C in the dynamic viscoelasticity measurement (Examples 1 to 9).

In order to obtain the stretch-formed container of polyester having a heat resistance against high temperatures of 100°C or higher, further, the present inventors have discovered that it is necessary to quickly effect the crystallization by the heat setting by using a metal mold to attain a high degree of crystallization, and, for this purpose, the polyester resin must be crystallized at a high rate in a temperature region for heat setting (150 to 180°C) while in order to decrease the residual strain due to the forming, the polyester resin must be capable of being stretch-formed at a high temperature with a low stress, i.e., must be stretched without being impaired by the crystallization thereof. For this purpose, the polyester resin to be used must have a mild crystallization rate in the stretching temperature region (110 to 120°C).

In the heat-set stretch-formed container of the present invention from the above point of view, the layer of the blend has such a suitable degree of crystallization rate that a calorific value of isothermal crystallization at 130°C reaches a maximum value in a time range of 4.5 to 12 minutes, exhibiting properties maintaining a good balance in the above-mentioned two temperature zones and imparting the heat resistance capable of withstanding high temperatures of 100°C or higher.

In the heat-set stretch-formed container of the invention, further, it is desired that at least the body portion thereof has a tan $\delta$ maximum value of not larger than 0.3 in the dynamic viscoelasticity measurement. That is, as described above, tan $\delta$ is a value obtained by dividing a loss modulus of elasticity E" by a storage modulus of elasticity E'. Therefore, a tan 6 maximum value which is not larger than 0.3 means that a ratio of the amorphous portion contributing to the loss component is smaller than that of the crystalline portion contributing to the storage component, and that the heat setting has been effected to a sufficient degree due to the crystallization.

In the stretch-formed container of the present invention, further, it is desired that the coefficient of contraction of the body portion at 200°C is not larger than 10% as measured by TMA. In the heat-set stretch-formed container, further, it is desired that at least the body portion has a temperature arriving at a 0.5% contraction of not lower than 130°C and a coefficient of contraction at 200°C of not larger than 3% as measured by TMA. Owing to the above properties, excellent heat resistance can be exhibited. Particularly, the heat-set stretch-formed container exhibits very high heat resistance capable of withstanding temperatures of as high as 100°C or more.

In the present invention, it is particularly desirable that a calorific value of isothermal crystallization at 130°C reaches a maximum value in a time range of 4.5 to 12 minutes, and at least a body portion has a tan $\delta$ maximum value of not larger than 0.3 and a tan $\delta$ maximum temperature of not higher than 115°C in the dynamic viscoelasticity measurement from the standpoint of heat resistance as will become obvious from the results of Examples appearing later.

That is, with the stretch-formed container of which the calorific value of isothermal crystallization at 130°C reaches a maximum value in the above range of time, the amount of change in the volume is suppressed to be not larger than 3% even after the container is filled with the content and is subjected to the retort sterilization (120°C). It will be further learned that the tan $\delta$ maximum value is not larger than 0.3 and the tan $\delta$ maximum temperature is not higher than 115°C (Examples 8 and 9).

In particular, it will be learned that Example 9 has excellent heat resistance against high temperatures of 130°C or more, i.e., has a temperature arriving at a 0.5% contraction of not lower than 210°C which is very higher than 130°C and a coefficient of contraction at 200°C of not larger than 3% as measured by TMA.

If the time in which the calorific value of isothermal crystallization at 130°C reaches a maximum value is shorter than 4.5 minutes or is longer than 12 minutes, on the other hand, the stretch-formed containers of polyester undergo the shrinking and deformation through the retort sterilization and exhibit poor heat resistance (Comparative Examples 9 to 14). Further, when neither the stretching at a high temperature nor the heat setting in a high-temperature metal mold is effected, the tan $\delta$ maximum value becomes not smaller than 0.3, and the heat resistance becomes inferior (Comparative Example 14).

The stretch-formed container of polyester of the present invention has a very small residual strain and an excellent stretch balance due to strain hardening, and has a particularly excellent heat resistance and a stretch balance due to strain hardening.

According to the process for producing a stretch-formed container of the invention, further, it is made possible to produce a stretch-formed container having a reduced residual strain and a good stretch balance by effectively utilizing the phenomenon of strain hardening despite of a stretching rate under a high-temperature condition of 110 to 120°C.

In the present invention, a calorific value of isothermal crystallization at 130°C of the polyester resin reaches a maximum value in a time range of 4.5 to 12 minutes exhibiting such an excellent heat resistance that at least a body portion has a temperature arriving at a 0.5% contraction of not lower than 130°C and a coefficient of contraction at 200°C of not larger than 3% as measured by TMA. Therefore, the container can be favorably used for containing the contents that must be heat-sterilized such as retort-sterilized.

According to the present invention, further, the heat resistance of not lower than 100°C that could, so far, be realized relying only upon the two-step blow forming method, can now be realized by a one-step blow forming method offering advantage in productivity and cost.

Brief Description of the Drawings

Fig. 1 is a diagram schematically illustrating a transmission microphotograph of a layer of a blend in the bottom portion of a stretch-formed container of the invention;
Fig. 2 is a diagram schematically illustrating a transmission microphotograph of a layer of a blend in the body portion of the stretch-formed container of the invention;
Fig. 3 is a diagram schematically illustrating the degrees of stretch orientation of a continuous phase surrounding a dispersion phase in the layer of the blend of the body portion; and
Fig. 4 is a reference view of a biaxially stretched and blow formed bottle prepared in Example.

Best Mode for Carrying Out the Invention

[Stretch-formed container]

(Layer of a blend)

As described above, the stretch-formed container of the present invention has a layer of a blend of at least an ethylene terephthalate type polyester resin and another material. Here, it is important that the layer of the blend has a dispersion structure of a continuous phase (sea portion) of the ethylene terephthalate type polyester resin and a dispersion phase (island portions) of the another material. When a resin is used as the another material, the dispersion structure becomes a so-called islands-in-the-sea dispersion structure. When an inorganic material is used as the another material, the dispersion structure assumes a state in which the inorganic material is dispersed in the ethylene terephthalate type polyester resin.

When it is attempted to improve the heat resistance by the heat setting, in particular, the blend used for the stretch-formed container of the invention must have a high crystallization rate in a heat-setting temperature region (150 to 180°C) and must have a mild crystallization rate in a stretching temperature region (110 to 120°C) . For this purpose according to the present invention, it is desired to use such a blend that a calorific value of isothermal crystallization at 130°C reaches a maximum value in a time range of 4.5 to 12 minutes.

(Ethylene terephthalate type polyester resin)

In the stretch-formed container of the present invention, the ethylene terephthalate type polyester resin constituting the continuous phase (sea portion) of the layer of the blend is the one in which not less than 50 mol% and, particularly, not less than 80 mol% of the dicarboxylic acid component is a terephthalic acid, and not less than 50 mol% and, particularly, not less than 80 mol% of the diol component is an ethylene glycol. Among the polyester resins, the above ethylene terephthalate type polyester resin satisfies mechanical properties, thermal properties and formability maintaining a good balance.

Carboxylic acid components other than the terephthalic acid may be contained as a matter of course. As the carboxylic acid components other than the terephthalic acid, there can be exemplified isophthalic acid, naphthalenedicarboxylic acid, p-β-oxyethoxybenzoic acid, biphenyl-4,4'-dicarboylic acid, diphenoxyethane-4,4'-dicarboxylic acid, 5-sodiumsulfoisophthalic acid, hexahydroterephthalic acid, adipic acid and sebacic acid.

As for the diol component, it is desired that not less than 50 mol% and, particularly, not less than 80 mol% of the diol component is an ethylene glycol from the standpoint of mechanical properties and thermal properties. As the diol component other than the ethylene glycol, there can be exemplified 1,4-butanediol, propylene glycol, neopentyl glycol, 1,6-hexylene glycol, diethylene glycol, triethylene glycol, cyclohexanedimethanol, ethylene oxide adduct of bisphenol A, glycerol and trimethylolpropane.

The above dicarboxylic acid component and the diol component may include trifunctional or more highly functional polybasic acids and polyhydric alcohols, e.g., polybasic acids such as trimellitic acid, pyromellitic acid, hemimellitic acid, 1,1,2,2-ethanetetracarboxylic acid, 1,1,2-ethanetricarboxylic acid, 1,3,5-pentanetricarboxylic acid, 1,2,3,4-cyclopentanetetracarboxylic acid, biphenyl-3,4,3',4'-tetracarboxylic acid, and polyhydric alcohols such as pentaerythritol, glycerol, trimethylolpropane, 1,2,6-hexanetriol, sorbitol, and 1,1,4,4-tetrakis(hydroxymethyl)cyclohexane.

In order to adjust the time in which the calorific value of isothermal crystallization at 130°C of the layer of the blend reaches a maximum value to lie in a range of 4.5 to 12 minutes in the stretch-formed container of the present invention, it is desired that the ethylene terephthalate type polyester resin constituting the continuous phase (sea portion) in the layer of the blend contains small amounts of a carboxylic acid component other than the terephthalic acid and/or a diol component other than the ethylene glycol and, particularly, contains an isophthalic acid or a naphthalenedicarboxylic acid in an amount of 0.5 to 5 mol% of the carboxylic acid component, and contains a 1,4-butanediol, a diethylene glycol or a cyclohexanedimethanol in an amount of 0.5 to 5 mol% of the diol component.

(Polyester resin as the another material)

In the stretch-formed container of the present invention, the polyester resin that constitutes the dispersion phase (island portions) of the layer of the blend may be the one comprising the above-mentioned dicarboxylic acid component and the diol component so far as it is present as a dispersion phase in the continuous phase of the ethylene terephthalate type polyester resin and forms the islands-in-the-sea dispersion structure. To form the dispersion phase, however, it is important that the polyester resin must not be compatible with the ethylene terephthalate type polyester resin that forms the continuous phase.

In order for the continuous phase surrounding the dispersion phase in the above stretched portion to be more highly stretched and oriented than the continuous phase in other portions, it is particularly desired to use a polyester resin having a glass transition temperature Tg(d) higher than the glass transition temperature Tg(m) of the ethylene terephthalate type polyester resin by not less than 10°C. The polyester resin having such a high Tg is more highly elastic in the stretching temperature region than the ethylene terephthalate type polyester resin that constitutes the continuous phase, and is less stretched than the continuous phase. As a result, the continuous phase surrounding the dispersion phase is locally and excessively stretched as compared to the continuous phase in other portions. Therefore, strain hardening occurs like when the high-speed stretching is effected under a high-temperature condition as described earlier, and the stretch-formed container having an excellent stretch balance can be obtained.

As the above polyester resin, there can be exemplified a polyester resin containing a naphthalenedicarboxylic acid as a constituent monomer or a polyester resin containing a cyclohexanedimethanol as a constituent monomer. It is further important that the constituent monomers are contained in large amounts to increase the non-compatibility with the ethylene terephthalate type polyester resin that forms the continuous phase.

As the polyester resin containing the naphthalene dicarboxylic acid as a constituent monomer, it is desired to use a polyester resin in which not less than 95 mol% of the dicarboxylic acid component is a naphthalenedicarboxylic acid and, preferably, to use a homopolyethylene naphthalate. It has been known that the polyester resin containing much naphthalenedicarboxylic acid has a glass transition temperature in a range of 100 to 120°C. The ethylene terephthalate type polyester resin and the polyethylene naphthalate can be easily ester-exchanged. As the ester-exchanging amount increases however, it becomes difficult to clearly separate the phase structure; i.e., local and excessive stretching does not occur and it becomes difficult to obtain the action and effect of the invention. Further, a decrease in the crystallization rate is accompanied by a decrease in the efficiency of heat setting and a decrease in the heat resistance. In blending the materials, therefore, it is desired to adjust the kneading time and the kneading temperature so as to suppress the exchange of esters. It is further desired to use a polyester resin having a glass transition temperature Tg (d) which is higher than Tg (m) by more than 20°C by taking a drop of Tg due to the ester-exchange reaction into consideration.

It is desired that the polyester resin containing the cyclohexanedimethanol as a constituent monomer is the one in which not less than 60 mol% of the diol component is the cyclohexanedimethanol. It has been known that the polyester resin containing much cyclohexanedimethanol has a glass transition temperature in a range of 80 to 100°C. Esters are exchanged little between the ethylene terephthalate type polyester resin and the polyester resin containing the cyclohexanedimethanol. In blending the materials, therefore, it is desired to use a polyester resin having a glass transition temperature Tg (d) which is higher than Tg (m) by more than 10°C.

As the polyester resin which is the another material, it is desired to use a polyester resin having a crystallization rate higher than that of the ethylene terephthalate type polyester resin that forms the continuous phase from the standpoint of obtaining a heat resistance that can withstand the retort-sterilization. As such a resin, a polyester resin containing the above cyclohexanedimethanol as a constituent monomer can be preferably used.

The polyester resin as the another material of the invention may be a polyester resin of the same kind as the ethylene terephthalate type polyester resin constituting the continuous phase so far as it is capable of forming an islands-in-the-sea dispersion structure. In this case, the polyester resin that is used has an intrinsic viscosity and a degree of crystallization higher than those of the ethylene terephthalate type polyester resin that constitutes the continuous phase.

(Inorganic material)

In the stretch-formed container of the present invention, the inorganic material that constitutes the dispersion phase in the layer of the blend may be talc (pyrophyllite), mica, kaolin or smectite. Among them, talc and mica can be preferably used.

It is desired that the inorganic material has an average particle size in a range of 0.1 to 50 $\mu$m and, particularly, 0.1 to 30 $\mu$m. If the average particle size is smaller than the above range, the dispersion may often become defective due to aggregation at the time of compounding. If the average particle size is larger than the above range, on the other hand, stress may concentrate due to an increase in the unhomogeneity giving rise to the occurrence of irregular stretching and burst.

(Dispersion structure)

The layer of the blend in the stretch-formed container of the invention is formed by blending the above ethylene terephthalate type polyester resin with another material.

When the polyester resin is used as the another material, the dispersion phase having a long diameter of 0.4 to 10 $\mu$m is present at a ratio of 60 to 100% in the unstretched portion in the layer of the blend, and the continuous phase surrounding the dispersion phase is stretched and oriented more highly than in the continuous phase in other portions in the stretched portion, forming an islands-in-the-sea dispersion structure.

Melt viscosities of the ethylene terephthalate type polyester resin forming the continuous phase and of the polyester resin forming the dispersion phase, a blending ratio thereof and a composition thereof, play an important role for forming the islands-in-the-sea dispersion structure.

It is desired that the polyester resin forming the dispersion phase has a melt viscosity higher than that of the ethylene terephthalate type polyester resin forming the continuous phase.

In melt-mixing the materials as described above, in general, it is a tendency that the continuous phase is formed by the component of large amounts and the dispersion phase is formed by the component of small amounts. To achieve the desired islands-in-the-sea structure, therefore, melt viscosities and compositions thereof must be taken into consideration. According to the present invention, however, it is desired to use the ethylene terephthalate type polyester resin that forms the continuous phase in an amount of not less than 85% by weight for forming the islands-in-the-sea dispersion structure. Preferably, the ethylene terephthalate type polyester resin and the polyester resin which is the another material are blended, usually, at a weight ratio in a range of 85:15 to 99.5:0.5 and, particularly, 88:12 to 95:5.

In particular, when the polyester resin containing the polyethylene naphthalate or the cyclohexanedimethanol is used as the another material, it is desired that the use thereof is in an amount of 0.5 to 15% by weight. If the amount thereof is larger than the above range, a mutual mesh structure may be formed instead of the islands-in-the-sea structure, whereby stress due to the stretching increases resulting in an increase in the residual strain making it difficult to obtain a good heat resistance.

Further, when the inorganic material is used as the another material, a dispersion structure is formed in the layer of the blend having a long diameter of 0.1 to 50 $\mu$m at a ratio of 60 to 100% in the unstretched portion and in which the continuous phase surrounding the dispersion phase is more highly stretched and oriented than the continuous phase in other portions in the stretched portion.

To form the above dispersion structure, it is important to use the inorganic material having an average particle size in a range of 0.1 to 50 $\mu$m and, particularly, 0.1 to 30 $\mu$m and that the inorganic material is contained in the blend in an amount of 1 to 10% by weight and, particularly, 0.1 to 5% by weight.

The stretch-formed container of the present invention has a feature in that the coefficient of contraction of the container body portion at 200°C is not larger than 10% as measured by TMA (thermomechanical measurement). The TMA measurement is to measure the deformation of a sample such as expansion and contraction as a function of the temperature, and the contraction behavior of the stretch-formed article at 200°C is dominated by the residual strain but not by the degree of crystallization. Therefore, a small coefficient of contraction of the stretch-formed article despite it is exposed to a high temperature means that amount of residual strain is small in the formed article. The small amount of residual strain readily contributes to improving the heat resistance. When the heat setting is effected, in particular, a small amount of residual strain that must be removed is effective in obtaining excellent heat resistance.

To obtain a heat-set stretch-formed container having heat resistance capable of withstanding the retort-sterilization by heat-setting the above stretch-formed container, further, it is desired that at least the body portion has a temperature arriving at a 0.5% contraction of not lower than 130°C and a coefficient of contraction at 200°C of not larger than 3% as measured by TMA.

(Layer constitution)

The stretch-formed container of the invention may have at least one layer of the blend, and can be realized as a container of a structure of a single layer of blend or can be realized as a container of a multi-layer structure including a layer of another thermoplastic resin in addition to the layer of the blend.

In the case of the container of the multi-layer structure, it is particularly desired that the inner and outer layers are constituted by the layers of the blend. The thickness of the layers of the blend and the thickness of the layer provided as required vary depending upon the layer constitution and cannot be exclusively specified, but can be set in the same manner as the known stretch-formed containers of polyester.

As the thermoplastic resin other than the polyester resin, any resin can be used provided it can be stretch blow-formed. Though not limited thereto only, there can be used olefin resins such as ethylene/vinyl alcohol copolymer and cyclic olefin polymer, and polyamide resins such as xylylene group-containing polyamide. It is, further, allowable to use an oxygen-absorbing gas-barrier resin composition blended with a transition metal catalyst, and recycled polyesters [PCR (resin regenerated from the used bottles), SCR (resin generated in the production plant) or mixtures thereof]. It is desired that the recycled polyester resins have intrinsic viscosities (IVs) in a range of 0.65 to 0.75 dL/g as measured by the above method.

Further, an adhesive resin may be interposed to adhere the inner layer or the outer layer to the intermediate layer. As the adhesive resin, there can be used an acid-modified olefin resin which is graft-polymerized with maleic acid or a polyester resin, an amorphous polyester resin, or a polyamide-type resin.

The polyester resin or the thermoplastic resin other than the polyester resin used in the present invention may be, further, blended with various additives such as a coloring agent, an ultraviolet-ray absorber, a parting agent, a lubricant, a nucleating agent and an inorganic layer-like compound for improving gas-barrier property within ranges in which the quality of the biaxially stretch-formed container which is the finally formed article is not impaired.

[Process for production]

The stretch-formed container of the present invention comprises a blend of an ethylene terephthalate type polyester resin and another material, and is produced by stretch blow-forming a preform having a layer of the blend which forms a dispersion structure comprising a continuous phase of the ethylene terephthalate type polyester resin and a dispersion phase of the another material under a condition of a stretching temperature of 110 to 120°C. The stretch-formed container having the above-mentioned properties is thus suitably produced irrespective of the stretching rate.

As described above, under a high-temperature stretching condition where excellent heat resistance can be imparted to the stretch-formed article, the stretch balance tends to be deteriorated unless the stretching is effected at a high rate. However, there is a limit on increasing the stretching rate. So far, therefore, the stretch-forming was conducted at a low temperature (95 to 105°C) sacrificing the advantage of high-temperature stretching which is to lower the residual strain. The process for producing the stretch-formed container of the present invention, on the other hand, uses the preform having the layer of the blend which forms the above-mentioned dispersion structure making it possible to obtain the stretch-formed container having excellent stretch balance by using a conventional stretch-forming apparatus without so much increasing the stretching rate even when the stretching is effected under a high-temperature condition of 110 to 120°C.

The preform used for forming the stretch-formed container of the invention is obtained by injection-forming or compression-forming the above-mentioned blend in a customary manner.

In stretch blow-forming the thus obtained preform according to the present invention, it is important to effect the stretch-forming being heated at a stretching temperature of 110 to 120°C and, preferably, 115 to 120°C. With the stretching temperature lying in the above high-temperature range, it is allowed to decrease the residual strain. Here, the temperature for heating the preform, i.e., the stretching temperature is a temperature on the outer surface of the preform just before being put to the stretch blow-forming, and can be measured by using a radiation thermometer, thermal image measuring instrument, etc.

To heat the preform at the above temperature and uniformly, it is desired to heat the preform from the inside and outside thereof by blowing the hot air, by using an infrared-ray heater or by inserting therein an iron core heated by high-frequency induction prior to effecting the stretch blowing.

The preform is fed into a known stretch blow-forming machine, set in a metal mold, pulled and stretched in the axial direction by pushing a stretch rod therein, and is stretch-formed in the circumferential direction by blowing the air. To efficiently execute the stretch forming at a high temperature in the process of the present invention, it is desired to blow the hot air heated at 100 to 150°C.

Irrespective of the stretching rate, the invention makes it possible to obtain a stretch balance similar to that of when the stretching is effected at a rate higher than the preset rate.

According to the present invention, the action and effect of both lowering the residual strain and maintaining a stretch balance, are accomplished irrespective of heat-setting conditions. When the heat resistance is required, however, it is particularly desired to effect the heat setting.

In the present invention, the stretch blow-forming is conducted at a temperature higher than the usually employed temperature and, therefore, an oligomer may precipitate due to the high-temperature stretching. To prevent this, therefore, it is desired to use a metal mold of which the surfaces have been treated. To improve parting property while suppressing deformation after the forming, further, it is desired to reliably cool the formed article by circulating the cooling air such as the air of room temperature or the cooled air in the bottle at the time of parting.

The stretching ratio of the biaxially stretched container is preferably 1.5 to 25 times as an area ratio and in which it is desired that the stretching ratio in the axial direction is 1.2 to 6 times while the stretching ratio in the circumferential direction is 1.2 to 4.5 times.

According to the process for producing the stretch-formed container of the invention, the phenomenon of strain hardening can be effectively utilized despite of a stretching rate under a high-temperature condition of 110 to 120°C, and it is allowed to form a stretch-formed container decreasing the residual strain while maintaining a good stretch balance, which are the effect of high-temperature stretching.

The results of study conducted so far reveal that maintaining a good stretch balance and suppressing the coefficient of contraction of the container body portion at 200°C to be not larger than 10% as measured by TMA, contribute to improving the heat resistance of the container irrespective of the heat-setting conditions. That is, the stretch-formed container of the invention has a heat resistance relatively higher than that of the stretch-formed containers formed under the same heat-setting conditions according to the prior art.

For example, though such a high heat resistance as that of the containers for aseptic filling is not required, it was, so far, necessary according to the prior method to effect the heat setting at about 120°C. With the stretch-formed container of the present invention, however, the heat setting does not have to be executed or the heat setting may be executed at a decreased temperature, and a decreased amount of energy is required for the heat setting.

When the heat resistance of an intermediate degree is required such as the heat resistance for hot filling or of the container that requires heat resistance and pressure resistance, the stretch-formed container of the present invention enables the heat-setting temperature to be lowered and, therefore, the amount of energy required for the heat setting to be decreased.

For the applications that require a high heat resistance executing the heat-sterilization at temperatures higher than 100°C, such as boiling and retort treatment, the present invention subjects the stretch-formed containers to the heat setting at a high temperature to realize a stretch-formed container having a high heat resistance that could not be achieved by the conventional methods, making it possible to effectively utilize the advantages of the stretch-formed container of the invention and of the process for the production thereof.

In the present invention as described above, it is desired to effect the heat setting at a temperature of 150 to 230°C and, preferably, 150 to 180°C after the stretch forming in order to obtain a high resistance in the applications where the heat-sterilization is conducted at temperatures in excess of 100°C, such as boiling and retort treatment. The heat setting can be conducted by known means, such as a one-molding method conducted in a blow-forming metal mold or a two-molding method conducted in a metal mold for heat setting separate from the blow-forming metal mold.

From the standpoint of handling, it is desired to cool the container with the cooling air at the time of taking it out from the metal mold after the heat setting.

The present invention is concerned with a method of improving the heat resistance at a portion where the stretching has not been effected in the stretch blow-formed container. In the portions where the stretching has not been effected such as the container mouth portion and the like portions, the thickness may be selected to be large or the heating and crystallization may be effected prior to the blow forming to improve the heat resistance.

EXAMPLES

I. Materials.

(1) Main materials.

Two kinds of materials were used, i.e., a polyethylene terephthalate type resin [PET 1](RT543CTHP, manufactured by Nihon Unipet Co.) and a polyethylene terephthalate type resin [PET 2] (RD353C, manufactured by Nihon Unipet Co.).

(2) Polyester species to be blended and a blending method.

A polyethylene naphthalate resin [Homo PEN](TN8065S, manufactured by Teijin KaseiCo.), an isophthalic acid-modified poly 1,4-cyclohexanedimethylene terephthalate resin [IA-modified PCT] (Cermex 13319, manufactured by Eastman Chemical Co.), a polybutylene terephthalate resin [Homo PBT] (Juranex 500FP, manufactured by Polyplastics Co.), an isophthalic acid-modified polybutylene terephthalate resin [IA-modified PBT] (Juranex 600LP, manufactured by Polyplastics Co.), amorphous cyclohexanedimethanol-containing polyethylene terephthalate resin [amorphous CHDM-modified PET] (S2008, manufactured by SK Chemical Co.) and a polyethylene naphthalate/polyethylene terephthalate copolymer [PEN/PET copolymer] (TN8756, manufactured by Teijin Kasei Co.) were used. The main materials were dry-blended with these polyester species at predetermined mixing ratios, and the blends were used for various kinds of forming. The resins had been dried before being mixed.

(3) Inorganic components to be blended and a blending method.

Use was made of a classified mica of not larger than 15 $\mu$m (LS-800, manufactured by Merck Co.) and a talc of 45 $\mu$m (reagent manufactured by Kishida Kagaku Co.). By using a biaxial extruder equipped with a granulator (TEM-35B, manufactured by Toshiba Kikai Co) and setting the barrel temperature to be 280°C, master batch resin pellets were prepared comprising the main materials and inorganic components at a weight ratio of 90 to 10. Thereafter, the master batch resin pellets and the main materials were dry-blended at a predetermined mixing ratio and were used for various kinds of forming. The resins and the inorganic components had been dried before being mixed.

II. Forming the stretch-blown bottles.

A blend dry-blended with the above resin pellets at a predetermined ratio was fed into a hopper of an injection-forming machine (NN75JS, manufactured by Niigata Tekkojo Co.), and was injection-formed by setting the barrel temperature to be 280°C and the cycle time to be 30 seconds to obtain a preform weighing 28 g and having a mouth diameter of 28 mm for forming a bottle. The body portion of the preform of which the mouth portion has been crystallized and whitened in advance by heating was heated by an infrared-ray heater from the outer side and by a heated iron core from the inner side up to a predetermined surface temperature and was, thereafter, biaxially stretch-blown to form a stretch-blown bottle shown in Fig. 4 having a volume of 500 ml and stretched into 3 times vertically, 3 times transversely and 9 times in terms of the area. The metal mold temperature was set to be room temperature (25°C) and 180°C. At the time of parting, further, the cooling air of room temperature (25°C) was introduced into the container.

III. Measurement.

(1) Measurement of glass transition temperatures (Tg(d) - Tg (m)).

A sample (10 mg) cut from the above material pellet was measured by using a differential scanning calorimeter (DSC7, manufactured by Perkin Elmer Co.). A profile of measuring the temperatures was as follows:

    1. Temperature was elevated from 25°C up to 290°C at a rate of 10°C/min.
    2. Maintained at 290°C for 5 minutes.
    3. Temperature was lowered from 290°C down to 25°C at a rate of 300°C/min.
    4. Temperature was elevated from 25°C up to 290°C at a rate of 10°C/min.
    5. Maintained at 290°C for 5 minutes.
    6. Temperature was lowered from 290°C down to 25°C at a rate of 10°C/min.

Among the above, a glass transition temperature was measured according to the profile of elevating the temperature of 4. The glass transition temperatures corresponding to Tg (m) were 78.6°C with the PET 1 and 78.4°C with the PET 2.

(2) Time in which a calorific value of isothermal crystallization at 130°C reaches a maximum value.

A sample (10 mg) cut from the panel portion in the bottle body portion was measured by using a differential scanning calorimeter (DSC7, manufactured by Perkin Elmer Co.). A profile of measuring the temperatures was as follows:

    1. Temperature was elevated from room temperature up to 290°C at a rate of 300°C/min.
    2. Maintained at 290°C for 5 minutes.
    3. Quickly cooled down to 130°C at a rate of 300°C/min.
    4. Maintained at 130°C for 30 minutes to effect the isothermal crystallization.

Among the above, a time (minutes) was measured in which the calorific value in the crystallization reached a maximum value in 4. above.

(3) Tan δ in the dynamic viscoelasticity measurement.

A test piece of a size of 10 mm x 30 mm was cut out from the panel portion in the bottle body portion in a manner that the lengthwise direction thereof was in the direction of height of the bottle, and was measured by using a viscoelasticity spectrometer (EXSTAR6000DMS, manufactured by Seiko Instruments Co.). Measuring conditions were as follows:

    Measuring mode: Tensile sinusoidal mode
    Gauge length of sample: 20 mm
    Frequency: 1 Hz
    Minimum tensile force: 100 mN
    Temperature elevation profile: Elevated from 25°C up to 210°C at a rate of 2 °C/min.

A tan δ maximum value and a tan δ maximum temperature were derived from the obtained tan δ curve.

(4) Observation of phase structure.

(4-1) Preparation of samples to be observed.

Samples were cut out from the lower part of a neck ring which is an unstretched portion of the stretch-blown bottle and from the central portion of the body wall which is the stretched portion. By using a microtome equipped with a glass knife or a diamond knife (REICHERT ULTRACUTS, manufactured by Reica Co.), samples for observation of a thickness of 5 μm were cut at a cutting speed of 1.0 mm/sec while being cooled with liquid nitrogen. Here, the observation surface was in the horizontal direction relative to the bottle grounding surface. The cut pieces were placed on slide glasses, dipped in a dipping solution (Bioleit, manufactured by Koken Co.), covered with cover glasses, and were observed by using microscopes.

(4-2) Phase structure of the unstretched portion and measurement of the ratios (%) of the numbers of domains of 0.4 to 10 $\mu$m and 0.1 to 50 $\mu$m present therein.

A sample cut out from the lower portion of the neck ring which is the unstretched portion of the stretch-blown bottle was observed for its phase structure being enlarged up to 1000 times by using a transmission optical microscope. The ratio of the number of dispersion phases of long diameters of 0.4 to 10 $\mu$m present therein was calculated from a photogram of a magnification of 1000 times (observation range of 88 x 70 $\mu$m$^2$) in compliance with the following formula. Here, the dispersion phases were regarded to be those which were confirmed to be obviously surrounded by the continuous phase as seen by eyes on the photograph.
In the case of the polyester blend:

```
Ratio of the number of domains that are present (%)
= (number of dispersion phases of long diameters of 0.4
to 10 μm)/(total number of the dispersion phases) x 100
```

In the case of the inorganic material blend:

```
Ratio of the number of domains that are present (%)
= (number of dispersion phases of long diameters of 0.1
to 50 μm)/(total number of the dispersion phases) x 100
```

(4-3) Deciding the presence of locally overstretched portions in the stretched portion.

The sample cut out from the central portion of the body wall of the stretch-blown bottle was observed for its phase structure being enlarged up to 1000 times by using a polarized microscope by arranging the polarizing plates in cross nicol. Here, the sample to be observed was arranged in a diagonal direction between the cross nicols. From the observed image, it was so decided that there was no local excess of stretching when the sample as a whole exhibited a uniform color tone. When the sample exhibited a shade of color tone representing a distribution of orientation degrees as shown in Fig. 3, it was decided that local excess of stretching was occurring.

(5) Deciding the stretch balance.

By using an oil magic ink, spots were marked in advance maintaining a gap of 10 mm on the body portion of the preform from the neck ring toward the bottom, and the preform was biaxially stretch-blown. When the gap among the marks was uniform on the body portion, it was so decided that the blown bottles possessed a good stretch balance.

(6) Temperature arriving at a 0.5% contraction and a coefficient of contraction at 200°C as measured by TMA.

A test piece of a size of 10 mm x 30 mm was cut out from the panel portion in the bottle body portion in a manner that the lengthwise direction thereof was in the direction of height of the bottle, and was measured by using a viscoelasticity spectrometer (EXSTAR6000DMS, manufactured by Seiko Instruments Co.). Measuring conditions were as follows:

Measuring mode: F controlmode
Initial gauge length of sample: 20 mm
Stress profile: No load
Temperature elevation profile: Elevated from 25°C up to 210°C at a rate of 2 °C/min.

From the obtained curve representing the amounts of contraction, a curve of coefficients of contraction was calculated in compliance with the following formula.

$$S \text{ (Coefficient of contraction \%)} = X/L \times 100$$

X: Amount of contraction at each temperature (mm).
L: Initial gauge length (mm) = 20 mm.

The amount of contraction at the start of measurement was set to be 0, and a temperature arriving at a coefficient of contraction of 0.5% (temperature arriving at a 0.5% contraction) and a coefficient of contraction when arrived at 200°C (coefficient of contraction at 200°C) were derived from the calculated curve of coefficients of contraction.

(7) Evaluating the retort adaptability.

The stretch-blown bottle was fully filled with tap water, tightly sealed with an aluminum cap, and was heat-treated in an autoclave at 120°C for 30 minutes. When a change of volume before and after the treatment was within 3%, it was regarded that the bottle was adaptable for retorting.

(Example 1)

Use was made of a polyethylene terephthalate type resin [PET 1] (RT543CTHP, manufactured by Nihon Unipet Co.) as a main material and a polyethylene naphthalate resin [Homo PEN] (TN8065S, manufactured by Teijin Kasei Co.) as a polyester species to be blended. The main material and the polyester species to be blended were dry-blended at a weight ratio of 95 to 5, and the blend was fed into the hopper of an injection-forming machine, and was injection-formed into a preform having a mouth diameter of 28 mm for forming a bottle under the conditions of a temperature of 280°C and a cycle time of 30 seconds.

After having crystallized and whitened the mouth portion of the preform in advance, the preform was biaxially stretch-blown to form a stretch-blown bottle having a volume of 500 ml. Here, the heating temperature or the stretching temperature for the preform was set to be 115°C, and the heat-setting temperature of the blowing metal mold was set to be room temperature (25°C).

Various portions were cut out from the bottle and were measured for their:

* Glass transition temperatures (Tg(d) - Tg(m));
* Phase structures and ratios (%) of the numbers of domains of 0.4 to 10$\mu$m and 0.1 to 50$\mu$m present in the unstretched portion;
* Presence of locally overstretched portions in the stretched portion;
* Tan $\delta$ maximum temperatures in the dynamic viscoelasticity measurement;
* Stretch balance; and
* Coefficients of contraction at 200°C as measured by TMA.

(Example 2)

A stretch-blown bottle was prepared in the same manner as in Example 1 but dry-blending the main material and the polyester species to be blended at a weight ratio of 90 to 10, and feeding the blend into the hopper of the injection-forming machine. Measurement was taken in the same manner as in Example 1.

(Example 3)

A stretch-blown bottle was prepared in the same manner as in Example 1 but dry-blending the main material and the polyester species to be blended at a weight ratio of 85 to 15, and feeding the blend into the hopper of the injection-forming machine. Measurement was taken in the same manner as in Example 1.

(Example 4)

A stretch-blown bottle was prepared in the same manner as in Example 2 but setting the heat-setting temperature of the metal mold to be 180°C. Measurement was taken in the same manner as in Example 1.

(Example 5)

A stretch-blown bottle was prepared in the same manner as in Example 4 but using an isophthalic acid-modified poly 1,4-cyclohexanedimethylene terephthalate resin [IA-modified PCT] (Cermex 13319, manufactured by Eastman Chemical Co.) as the polyester species to be blended. Measurement was taken in the same manner as in Example 1.

(Example 6)

Use was made of a polyethylene terephthalate type resin [PET 1] (RT543CTHP, manufactured by Nihon Unipet Co.) as a main material and a classified mica of not larger than 15 $\mu$m (LS-800, manufactured by Merck Co.) as the inorganic material to be blended. The main material and the master batch resin pellets were dry-blended in such a manner that the weight ratio of the main material and the inorganic component to be blended was 99 to 1. The blend was fed into the hopper of an injection-forming machine. In other respects, a stretch-blown bottle was prepared in the same manner as in Example 4, and measurement was taken in the same manner as in Example 1.

(Example 7)

A stretch-blown bottle was prepared in the same manner as in Example 6 but using a talc of 45 $\mu$m (reagent manufactured by Kishida Kagaku Co.) as the inorganic material to be blended, and dry-blending the main material and the master batch resin pellets in a manner that the weight ratio of the main material and the inorganic material to be blended was 97.5 to 2.5. The blend was fed into the hopper of an injection-forming machine. In other respects, a stretch-blown bottle was prepared in the same manner as in Example 6, and measurement was taken in the same manner as in Example 1.

(Comparative Example 1)

A stretch-blown bottle was prepared in the same manner as in Example 1 but using the polyethylene terephthalate type resin [PET 1] (RT543CTHP, manufactured by Nihon Unipet Co.) only as the material and setting the preform-heating temperature to be 100°C. Measurement was taken in the same manner as in Example 1.

(Comparative Example 2)

A stretch-blown bottle was prepared in the same manner as in Example 1 but setting the heat-setting temperature of the metal mold to be 180°C. Measurement was taken in the same manner as in Example 1.

(Comparative Example 3)

A stretch-blown bottle was prepared in the same manner as in Example 1 but setting the preform-heating temperature to be 115°C. Measurement was taken in the same manner as in Example 1.

(Comparative Example 4)

A stretch-blown bottle was prepared in the same manner as in Example 1 but dry-blending the materials in such a manner that the weight ratio of the main material and the polyester species to be blended was 70 to 30. Measurement was taken in the same manner as in Example 1.

(Comparative Example 5)

The stretch-blowing was attempted in the same manner as in Example 4 but using a polybutylene terephthalate resin [Homo PBT](Juranex 500FP, manufactured by Polyplastics Co.) as the polyester species to be blended. However, the stretch forming could not be accomplished due to the crystallization.

(Comparative Example 6)

A stretch-blown bottle was prepared in the same manner as in Example 4 but using an amorphous cyclohexanedimethanol-containing polyethylene terephthalate resin [amorphous CHDM-modified PET] (S2008, manufactured by SK Chemical Co.) as the polyester species to be blended. Measurement was taken in the same manner as in Example 1.

(Comparative Example 7)

A stretch-blown bottle was prepared in the same manner as in Example 4 but using a polyethylene naphthalate/ polyethylene terephthalate copolymer [PEN/PET copolymer] (TN8756, manufactured by Teijin Kasei Co.) as the polyester species to be blended. Measurement was taken in the same manner as in Example 1.

(Comparative Example 8)

A stretch-blown bottle was prepared in the same manner as in Example 5 but setting the preform-heating temperature to be 105°C. Measurement was taken in the same manner as in Example 1.

(Example 8)

A stretch-blown bottle was prepared in the same manner as in Example 5 but using a polyethylene terephthalate type resin [PET 2] (RD353C, manufactured by Nihon Unipet Co.) as the main material and setting the preform-heating temperature to be 120°C. Measurement was taken concerning:

* Time in which a calorific value of isothermal crystallization at 130°C reached a maximum value;
* Confirming the phase structure in the unstretched portion;
* A tan $\delta$ maximum value and a tan $\delta$ maximum temperature in the dynamic viscoelasticity measurement;
* A temperature arriving at a 0.5% contraction and a coefficient of contraction at 200°C as measured by TMA; and
* Evaluation of the retort adaptability.

(Example 9)

A stretch-blown bottle was prepared in the same manner as in Example 6 but using the polyethylene terephthalate type resin [PET 2] (RD353C, manufactured by Nihan Unipet Co.) as the main material and setting the preform-heating temperature to be 120°C. Measurement was taken in the same manner as in Example 8.

(Comparative Example 9)

A stretch-blown bottle was prepared in the same manner as in Comparative Example 1 but setting the preform-heating temperature to be 115°C and setting the heat-setting temperature of the metal mold to be 180°C. Measurement was taken in the same manner as in Example 8.

(Comparative Example 10)

A stretch-blown bottle was prepared in the same manner as in Comparative Example 5 but setting the preform-heating temperature to be 105°C. Measurement was taken in the same manner as in Example 8.

(Comparative Example 11)

A stretch-blown bottle was prepared in the same manner as in Comparative Example 10 but using an isophthalic acid-modified polybutylene terephthalate resin [IA-modified PBT](Juranex 600LP, manufactured by Polyplastics Co.) as the polyester species to be blended. Measurement was taken in the same manner as in Example 8.
By using the material of the above composition, however, forming could not be accomplished due to the crystallization if the preform-heating temperature was set to be not lower than 110°C.

(Comparative Example 12)

A stretch-blown bottle was prepared in the same manner as in Comparative Example 6, and measurement was taken in the same manner as in Example 8.

(Comparative Example 13)

A stretch-blown bottle was prepared in the same manner as in Comparative Example 7, and measurement was taken in the same manner as in Example 8.

(Comparative Example 14)

A stretch-blown bottle was prepared in the same manner as in Comparative Example 1, and measurement was taken in the same manner as in Example 8.

Tables 1 and 2 show the results of the above measurements.

Table 1

| | Main material | Blended component | | | | Stretching temperature (℃) | Heat-setting temp. of metal mold (℃) | Bottle formability |
|---|---|---|---|---|---|---|---|---|
| | | Chemical species | Blended amount (wt%) | Tg(d) (℃) | Tg(d) - Tg(m) (℃) | | | |
| Ex. 1 | PET 1 | Homo PEN | 5% | 121.0 | 42.4 | 115 | 25 | good |
| Ex. 2 | PET 1 | Homo PEN | 10% | 121.0 | 42.4 | 115 | 25 | good |
| Ex. 3 | PET 1 | Homo PEN | 15% | 121.0 | 42.4 | 115 | 25 | good |
| Ex. 4 | PET 1 | Homo PEN | 10% | 121.0 | 42.4 | 115 | 180 | good |
| Ex. 5 | PET 1 | IA-modified PCT | 10% | 98.0 | 19.4 | 115 | 180 | good |
| Ex. 6 | PET 1 | mica | 1% | – | – | 115 | 180 | good |
| Ex. 7 | PET 1 | talc | 2.5% | – | – | 115 | 180 | good |

EP 1 876 008 A1

Table 1 (continued)

| | Phase structure of unstretched portion | | | Local overstretching | Dynamic viscoelasticity | Stretch balance of body portion | TMA measurement |
|---|---|---|---|---|---|---|---|
| | Phase structure | Ratio of the number of domains of 0.4 to 10 µm (in the case of polyester) | Ratio of the number of domains of 0.1 to 50 µm (in the case of inorganic material) | | Tan δ max. temp. (℃) | | Coefficient of contraction (%) at 200℃ |
| Ex. 1 | islands in the sea | 100 | - | yes | 93.0 | good | 3.9 |
| Ex. 2 | islands in the sea | 100 | - | yes | 114.3 | good | 8.1 |
| Ex. 3 | islands in the sea | 90 | - | yes | 114.6 | good | 5.7 |
| Ex. 4 | islands in the sea | 100 | - | yes | 112.4 | good | 0.9 |
| Ex. 5 | islands in the sea | 100 | - | yes | 106.0 | good | 2.3 |
| Ex. 6 | dispersion | - | 100 | yes | 102.1 | good | -0.3 |
| Ex. 7 | dispersion | - | 100 | yes | 105.0 | good | -0.2 |

Table 1 (continued)

| | Main material | Blended component | | | | Stretching temperature (°C) | Heat-setting temp. of metal mold (°C) | Bottle formability |
| | | Chemical species | Blended amount (wt%) | Tg(d) (°C) | Tg(d)- Tg(m) (°C) | | | |
|---|---|---|---|---|---|---|---|---|
| Comp. Ex. 1 | PET 1 | none | – | – | – | 100 | 25 | good |
| Comp. Ex. 2 | PET 1 | none | – | – | – | 100 | 180 | good |
| Comp. Ex. 3 | PET 1 | none | – | – | – | 115 | 25 | neck was thin |
| Comp. Ex. 4 | PET 1 | Homo PEN | 30% | 121.0 | 42.4 | 115 | 25 | good |
| Comp. Ex. 5 | PET 1 | Homo PBT | 10% | 49.0 | -29.6 | 115 | 180 | could not be stretched due to crystallization |
| Comp. Ex. 6 | PET 1 | amorphous CHDM-modified PET | 10% | 80.0 | 1.4 | 115 | 180 | neck was thin |
| Comp. Ex. 7 | PET 1 | PEN/PET copolymer | 10% | 119.5 | 40.9 | 115 | 180 | neck was thin |
| Comp. Ex. 8 | PET 1 | IA-modified PCT | 10% | 98 | 19.4 | 105 | 180 | good |

EP 1 876 008 A1

EP 1 876 008 A1

Table 1 (continued)

| | Phase structure of unstretched portion | | | | Dynamic viscoelasticity | | TMA measurement |
|---|---|---|---|---|---|---|---|
| | Phase structure | Ratio of the number of domains of 0.4 to 10 μm (in the case of polyester) | Ratio of the number of domains of 0.1 to 50 μm (in the case of inorganic material) | Local overstretching | Tan δ max. temp. (℃) | Stretch balance of body portion | Coefficient of contraction (%) at 200℃ |
| Comp. Ex. 1 | uniform layer | – | – | no | 116.7 | good | 17.6 |
| Comp. Ex. 2 | uniform layer | – | – | no | 121.1 | good | 11.8 |
| Comp. Ex. 3 | uniform layer | – | – | no | 95.7 | poor | 20.9 |
| Comp. Ex. 4 | islands in the sea mixed with mesh | 50 | – | yes | 120.0 | good | 14.1 |
| Comp. Ex. 5 | uniform layer | – | – | – | – | – | – |
| Comp. Ex. 6 | uniform layer | – | – | no | 101.4 | poor | 10.1 |
| Comp. Ex. 7 | uniform layer | – | – | no | 117.9 | poor | 10.0 |
| Comp. Ex. 8 | islands in the sea | 100 | – | yes | 122.6 | good | 10.2 |

Table 2

| | Main material | Chemical species of blended component | Blended amount (wt%) | Stretching temperature (°C) | Heat-setting temp. of metal mold (°C) | Bottle formability | Phase structure of unstretched portion |
|---|---|---|---|---|---|---|---|
| Ex. 8 | PET 2 | IA-modified PCT | 10% | 120 | 180 | good | islands in the sea |
| Ex. 9 | PET 2 | mica | 1% | 120 | 180 | good | dispersion |
| Comp. Ex. 9 | PET 1 | none | - | 115 | 180 | neck was thin | uniform layer |
| Comp. Ex. 10 | PET 1 | HomoPBT | 10% | 105 | 180 | good | uniform layer |
| Comp. Ex. 11 | PET 1 | IA-modified PBT | 10% | 105 | 180 | good | uniform layer |
| Comp. Ex. 12 | PET 1 | amorphous CHDM-modified PET | 10% | 115 | 180 | neck was thin | uniform layer |
| Comp. Ex. 13 | PET 1 | PEN/PET copolymer | 10% | 115 | 180 | neck was thin | uniform layer |
| Comp. Ex. 14 | PET 1 | none | - | 100 | 25 | good | uniform layer |

EP 1 876 008 A1

Table 2 (continued)

| | Peak time of isothermal crystallization at 130℃ (min) | Dynamic viscoelasticity | | TMA measurement | | Retort adaptability |
|---|---|---|---|---|---|---|
| | | Tan δ in absolute value | Tan δ max. temp. (℃) | Temp. arriving at 0.5% contraction (℃) | Coefficient of contraction at 200℃ (%) | |
| Ex. 8 | 4.5 | 0.204 | 87.6 | 169.445 | 1.2 | ○ |
| Ex. 9 | 7.0 | 0.266 | 85 | 210℃ or higher | -0.8 | ○ |
| Comp. Ex. 9 | 12.5 | 0.224 | 108.5 | 162.2 | 3.3 | × |
| Comp. Ex. 10 | 3.6 | 0.207 | 112.9 | 103.3 | 14.4 | × |
| Comp. Ex. 11 | 4.0 | 0.223 | 109.9 | 100.7 | 14.1 | × |
| Comp. Ex. 12 | 12.5 | 0.254 | 101.4 | 129.7 | 10.1 | × |
| Comp. Ex. 13 | 30 or longer | 0.239 | 117.9 | 117.1 | 10.0 | × |
| Comp. Ex. 14 | 12.5 | 0.303 | 116.7 | 95.9 | 17.6 | × |

**Claims**

1. A stretch-formed container having a layer of a blend of an ethylene terephthalate type polyester resin and another material, wherein the layer of the blend has a dispersion structure comprising a continuous phase of the ethylene terephthalate type polyester resin and a dispersion phase of the another material, and at least the container body portion has a tan δ maximum temperature of not higher than 115°C in the dynamic viscoelasticity measurement.

2. The stretch-formed container according to claim 1, wherein the another material is a polyester resin.

3. The stretch-formed container according to claim 2, wherein the polyester resin contains a naphthalenedicarboxylic acid as a constituent monomer.

4. The stretch-formed container according to claim 2, wherein the polyester resin contains a cyclohexanedimethanol as a constituent monomer.

5. The stretch-formed container according to claim 2, wherein a glass transition temperature Tg(m) of the ethylene terephthalate type polyester resin and a glass transition temperature Tg(d) of the polyester resin, satisfy a relationship Tg(d) - Tg (m) $\geqq$ 10 (°C).

6. The stretch-formed container according to claim 2, wherein the dispersion structure contains the dispersion phase of a long diameter of 0.4 to 10 $\mu$m at a ratio of 60 to 100% in the unstretched portion.

7. The stretch-formed container according to claim 2, wherein the blend is blended with the polyester resin which is the another material in an amount of 0.5 to 15% by weight.

8. The stretch-formed container according to claim 1, wherein the another material is an inorganic material.

9. The stretch-formed container according to claim 8, wherein the inorganic material is a talc and/or a mica.

10. The stretch-formed container according to claim 8, wherein the dispersion structure contains the dispersion phase of a long diameter of 0.1 to 50 $\mu$m at a ratio of 60 to 100% in the unstretched portion.

11. The stretch-formed container according to claim 8, wherein the blend is blended with the inorganic material in an amount of 0.1 to 10% by weight.

12. The stretch-formed container according to claim 1, wherein the dispersed structure is such that, in the stretched portion, the continuous phase surrounding the dispersion phase is more highly stretched and oriented than the continuous phase in other portions.

13. The stretch-formed container according to claim 1, wherein the coefficient of contraction of the container body portion at 200°C is not larger than 10% as measured by TMA.

14. The stretch-formed container according to claim 1, wherein the stretch-formed container is heat set under a temperature condition of 150 to 230°C.

15. The stretch-formed container according to claim 14, wherein the layer of the blend is such that a calorific value of isothermal crystallization at 130°C reaches a maximum value in a time range of 4 . 5 to 12 minutes, and at least a body portion has a tan δ maximum value of not larger than 0.3 and a tan δ maximum temperature of not higher than 115°C in the dynamic viscoelasticity measurement.

16. The stretch-formed container according to claim 14, wherein at least the body portion has a temperature arriving at a 0.5% contraction of not lower than 130°C and a coefficient of contraction at 200°C of not larger than 3% as measured by TMA.

17. A process for producing a stretch-formed container comprising a blend of an ethylene terephthalate type polyester resin and another material, by stretch blow-forming a preform that has a layer of the blend forming a dispersion structure comprising a continuous phase of the ethylene terephthalate type polyester resin and a dispersion phase of the another material under a condition of a stretching temperature of 110 to 120°C.

**18.** The process for producing a stretch-formed container according to claim 17, wherein the blend contains a polyester resin as the another material, and is blended with the polyester resin in an amount of 0.5 to 15% by weight.

**19.** The process for producing a stretch-formed container according to claim 17, wherein the blend contains an inorganic material as the another material, and is blended with the inorganic material in an amount of 0.1 to 10% by weight.

**20.** The process for producing a stretch-formed container according to claim 17, wherein following the stretch blow forming, the heat setting is conducted under a temperature condition of 150 to 230°C.

**21.** The process for producing a stretch-formed container according to claim 17, wherein the preform comprises such a blend that a calorific value of isothermal crystallization at 130°C reaches a maximum value in a time range of 4.5 to 12 minutes.

## Fig. 1

10 μm

## Fig. 2

DIRECTION OF
THICKNESS

STRETCHING
DIRECTION

## Fig. 3

STRETCH ORIENTATION ⟶ HIGH

## Fig. 4

## INTERNATIONAL SEARCH REPORT

| | International application No. |
|---|---|
| | PCT/JP2006/308923 |

A. CLASSIFICATION OF SUBJECT MATTER
*B29C49/08*(2006.01), *B29C49/64*(2006.01), *B65D1/00*(2006.01), *C08L67/02*
(2006.01), *B29K67/00*(2006.01), *B29L22/00*(2006.01)

According to International Patent Classification (IPC) or to both national classification and IPC

B. FIELDS SEARCHED

Minimum documentation searched (classification system followed by classification symbols)
B29C49/00-49/80, C08K3/00-13/08, C08L1/00-101/14

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 09-286905 A  (Mitsubishi Gas Chemical Co., Inc.), 04 November, 1997 (04.11.97), Claims 1, 3; Par. Nos. [0012], [0019], [0035]; Fig. 2 (Family: none) | 1-21 |
| Y | JP 2003-136583 A  (Toyo Seikan Kaisha, Ltd.), 14 May, 2003 (14.05.03), Claims 1, 2; Par. Nos. [0029], [0032], [0096] (Family: none) | 1-21 |
| Y | JP 2003-183481 A  (Toyo Seikan Kaisha, Ltd.), 03 July, 2003 (03.07.03), Claim 1; Par. Nos. [0019] to [0021], [0024], [0025], [0031] (Family: none) | 8-11,19 |

|   | Further documents are listed in the continuation of Box C. |   | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June, 2006 (07.06.06) | 20 June, 2006 (20.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5178338 A
- JP 1767894 A
- JP 2001150522 A